# EUROPEAN PATENT SPECIFICATION

(11) **EP 4 510 710 B1**
(45) Date of publication and mention of the grant of the patent: **26.08.2026**
(21) Application number: 23858732.3
(22) Date of filing: 15.05.2023
(51) Int. Cl.: H04W 48/18, H04W 48/08, H04W 4/16, H04W 8/26, H04W 8/18, H04W 8/12

(54) **ACCESS METHOD AND APPARATUS BASED ON HETEROGENEOUS NETWORK ROAMING**
ZUGANGSVERFAHREN UND -VORRICHTUNG AUF BASIS VON HETEROGENEM NETZWERK-ROAMING
PROCÉDÉ ET APPAREIL D'ACCÈS BASÉS SUR UNE ITINÉRANCE DE RÉSEAU HÉTÉROGÈNE

(30) Priority: 30.08.2022 CN 202211061621
(43) Date of publication of application: 19.02.2025
(73) Proprietor: Honor Device Co., Ltd., Shenzhen, Guangdong 518040 (CN)
(72) Inventor: ZHANG, Jian, Shenzhen, Guangdong 518040 (CN)
(74) Representative: Isarpatent
(86) International application number: PCT/CN2023/094259
(87) International publication number: WO 2024/045693

(56) References cited:
- WO-A1-2023/130857
- WO-A1-2024/020939
- CN-A- 113 543 247
- CN-A- 114 615 635
- CN-A- 114 615 635
- CN-A- 115 134 892
- CN-A- 115 802 335
- US-A1- 2022 167 244
- "3rd Generation Partnership Project; Technical Specification Group Services and System Aspects; Procedures for the 5G System (5GS); Stage 2 (Release 17)", vol. SA WG2, no. V17.5.0, 15 June 2022 (2022-06-15), pages 1 - 744, XP052182883, Retrieved from the Internet <URL:https://ftp.3gpp.org/Specs/archive/23_series/23.502/23502-h50.zip 23502-h50.docx> [retrieved on 20220615]

## Description

### TECHNICAL FIELD

This application relates to the field of communication technologies, and in particular, to a method for performing access to a visited network based on inter-network roaming, a terminal device, and a core network device.

### BACKGROUND

Inter-network roaming is a service by using which a terminal device in a given public land mobile network (public land mobile network, PLMN) can obtain a service from another PLMN in any place or region in a same country. Currently, there are two roaming scenarios. In one roaming scenario, when a terminal device has no signal coverage in a home network, the terminal device needs to roam to a visited network, and the visited network provides a service for the terminal device. In the other roaming scenario, within a coverage area of a home network, a terminal device has only a 4th generation mobile communication technology (4th generation mobile communication technology, 4G) signal, and has no 5th generation mobile communication technology (5th generation mobile communication technology, 5G) signal. The terminal device needs to roam to a visited network, and the visited network provides a 5G service for the terminal device. Usually, the home network and the visited network respectively belong to different operators.

However, the visited network has only a 5G signal, and has no 4G signal. In addition, some terminal devices do not support voice over new radio (voice over new radio, VoNR). When a terminal device that does not support VoNR roams to a visited network, the terminal device cannot perform a voice call, resulting in poor user experience.

Document "3rd Generation Partnership Project; Technical Specification Group Services and System Aspects; Procedures for the 5G System (5GS); Stage 2 (Release 17)", 3GPP STANDARD; 3GPP TS 23.502, 3RD GENERATION PARTNERSHIP PROJECT (3GPP), MOBILE COMPETENCE CENTRE; 650, ROUTE DES LUCIOLES; F-06921 SOPHIA-ANTIPOLIS CEDEX; FRANCE, vol. SA WG2, no. V17.5.0, 15 June 2022 (2022-06-15), pages 1-744, XP052182883, discloses the Registration and Deregistration procedures which provides the required functionality to register or deregister a UE/user with the 5GS.

CN 114 615 635 A discloses a method and apparatus for voice services based on inter-network roaming, as well as computer-readable media.

### SUMMARY

This application provides a method for performing access to a visited network based on inter-network roaming, a terminal device, and a core network device, as defined in the appended set of claims, to help ensure a voice call of a terminal device in an inter-network roaming scenario, thereby improving user experience.

It should be understood that supporting VoNR by the terminal device is a necessary condition for supporting inter-network roaming by the terminal device, in other words, a terminal device supporting VoNR does not necessarily support inter-network roaming, but a terminal device supporting inter-network roaming necessarily supports VoNR.

It should be further understood that the core network capability information is first sent by the terminal device to an access network device, and then sent by the access network device to the core network device, in other words, the core network capability information is transparently transmitted by the access network device to the core network device. For example, the core network capability information may be sent by using non-access stratum (non-access stratum, NAS) signaling.

According to the method for performing access based on inter-network roaming provided in this application, the terminal device sends the core network capability information to the core network device. When the terminal device supports inter-network roaming, the terminal device receives an EPLMN list sent by the core network device. If the terminal device does not support inter-network roaming, the terminal device receives no EPLMN list sent by the core network device, and the terminal device still camps on a home network. In this way, for a terminal device that does not support VoNR or inter-network roaming, if a 4G signal exists in a home network, the terminal device can continue to use the 4G signal in the home network to perform a voice call. For a terminal device that supports inter-network roaming, the terminal device can roam to a visited network, and use a 5G signal in the visited network to perform a voice call, to obtain higher-quality and higher-speed voice service experience. Therefore, the method for performing access based on inter-network roaming in this application helps ensure a voice call of a terminal device in an inter-network roaming scenario, thereby improving user experience.

In some implementations of this application, the second indication information is a spare bit in the core network capability information.

For example, when the spare bit in the core network capability information is a first value, the second indication information indicates that the terminal device supports inter-network roaming; or when the spare bit in the core network capability information is a second value, the second indication information indicates that the terminal device does not support inter-network roaming. For example, the spare bit may be 1 bit, the first value is 1, and the second value is 0. Alternatively, the first value is 0, and the second value is 1. This is not limited in this embodiment of this application.

In some implementations of this application, the method further includes: when the terminal device supports inter-network roaming, the terminal device enables network search for an inter-network roaming frequency band, and/or accesses a visited network corresponding to a network identifier included in the EPLMN list; or when the terminal device does not support inter-network roaming, the terminal device disables network search for an inter-network roaming frequency band, and/or forbids access to a visited network corresponding to a network identifier included in the EPLMN list.

According to the access method in this embodiment of this application, when the terminal device does not support inter-network roaming, the terminal device disables network search for the inter-network roaming frequency band, and/or forbids access to the visited network corresponding to the network identifier included in the EPLMN list, to ensure that the terminal device does not roam to the visited network, and reduce energy consumption of the terminal device.

In a design, the terminal device may include one-to-one corresponding modules that perform the methods/operations/steps/actions described in this application. The module may be implemented by a hardware circuit, may be implemented by software, or may be implemented by a hardware circuit in combination with software.

### BRIEF DESCRIPTION OF DRAWINGS

FIG. 1 is a schematic diagram of a communication system according to an embodiment of this application;
FIG. 2 is a schematic flowchart of a method for performing access based on inter-network roaming according to an embodiment of this application;
FIG. 3 is a schematic flowchart of a method for determining whether a terminal device supports inter-network roaming according to an embodiment of this application;
FIG. 4 is a schematic flowchart of another method for performing access based on inter-network roaming according to an embodiment of this application;
FIG. 5 is a schematic block diagram of an apparatus for performing access based on inter-network roaming according to an embodiment of this application;
FIG. 6 is a schematic block diagram of another apparatus for performing access based on inter-network roaming according to an embodiment of this application; and
FIG. 7 is a schematic block diagram of still another apparatus for performing access based on inter-network roaming according to an embodiment of this application.

### DESCRIPTION OF EMBODIMENTS

The following describes technical solutions in this application with reference to accompanying drawings.

In embodiments of this application, words such as "first" and "second" are used to distinguish between same or similar items with basically same functions and effects. For example, a first chip and a second chip are merely used to distinguish between different chips, and are not intended to limit a sequence thereof. A person skilled in the art may understand that the words such as "first" and "second" do not constitute a limitation on a quantity or an execution sequence, and the words such as "first" and "second" do not indicate a definite difference.

It should be noted that, in embodiments of this application, words such as "an example" or "for example" are used to represent giving an example, an illustration, or a description. Any embodiment or design solution described as "an example" or "for example" in this application should not be explained as being more preferred or having more advantages than another embodiment or design solution. Exactly, use of the words such as "an example" or "for example" is intended to present a related concept in a specific manner.

In embodiments of this application, "at least one" means one or more, and "a plurality of" means two or more. The term "and/or" describes an association relationship between associated objects and indicates that three relationships may exist. For example, A and/or B may indicate the following cases: Only A exists, both A and B exist, and only B exists, where A and B may be singular or plural. The character "/" generally indicates an "or" relationship between associated objects. "At least one of the following items (pieces)" or a similar expression thereof indicates any combination of these items, including a single item (piece) or any combination of a plurality of items (pieces). For example, at least one of a, b, or c may represent a, b, c, a-b, a-c, b-c, or a-b-c, where a, b, and c may be singular or plural.

The technical solutions in embodiments of this application may be applied to various communication systems, for example, a long term evolution (long term evolution, LTE) system, an LTE frequency division duplex (frequency division duplex, FDD) system, an LTE time division duplex (time division duplex, TDD) system, a universal mobile telecommunication system (universal mobile telecommunication system, UMTS), a 5th generation (5th generation, 5G) system or new radio (new radio, NR), or another evolved communication system.

The terminal device in embodiments of this application may also be referred to as user equipment (user equipment, UE), a mobile station (mobile station, MS), a mobile terminal (mobile terminal, MT), an access terminal, a subscriber unit, a subscriber station, a mobile station, a remote station, a remote terminal, a mobile device, a user terminal, a terminal, a wireless communication device, a user agent, a user apparatus, or the like.

The terminal device may be a device that provides voice and/or data connectivity for a user, for example, a handheld device or an in-vehicle device having a wireless connection function. At present, examples of some terminals are as follows: a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self driving (self driving), a wireless terminal in remote medical surgery (remote medical surgery), a wireless terminal in smart grid (smart grid), a wireless terminal in transportation safety (transportation safety), a wireless terminal in smart city (smart city), a wireless terminal in smart home (smart home), a cellular phone, a cordless telephone set, a session initiation protocol (session initiation protocol, SIP) phone, a wireless local loop (wireless local loop, WLL) station, a personal digital assistant (personal digital assistant, PDA), a handheld device having a wireless communication function, a computing device, another processing device connected to a wireless modem, an in-vehicle device, a terminal device in a 5G network, a terminal device in a future evolved public land mobile network (public land mobile network, PLMN), and the like. This is not limited in embodiments of this application.

As an example rather than a limitation, in embodiments of this application, the terminal device may alternatively be a wearable device. The wearable device may also be referred to as a smart wearable device, and is a collective term of wearable devices developed by intelligently designing daily wearing based on a wearable technology, for example, glasses, gloves, a watch, clothes, and shoes. The wearable device is a portable device that can be directly worn on a body or integrated into clothes or an accessory of a user. The wearable device is not only a hardware device, but also implements a powerful function through software support, data exchange, and cloud interaction. In a broad sense, the smart wearable device includes full-featured and large-size devices that can implement complete or partial functions without depending on smartphones, such as a smart watch or smart glasses, and devices that focus on only one type of application and need to work with other devices such as smartphones, such as various smart bracelets or smart jewelry for monitoring physical signs.

In addition, in embodiments of this application, the terminal device may alternatively be a terminal device in an internet of things (internet of things, IoT) system. IoT is an important part in future development of information technologies, and is mainly technically characterized in connecting things to networks by using communication technologies, to achieve intelligent networks of human-machine interconnection and interconnection between things.

In addition, the access network device in embodiments of this application may be a device configured to communicate with a terminal device. The access network device may also be referred to as a radio access network device, and may be a transmission reception point (transmission reception point, TRP), may be an evolved NodeB (evolved NodeB, eNB or eNodeB) in an LTE system, may be a home base station (for example, home evolved NodeB, or home NodeB, HNB), or a base band unit (base band unit, BBU), or may be a radio controller in a cloud radio access network (cloud radio access network, CRAN) scenario. Alternatively, the access network device may be a relay station, an access point, an in-vehicle device, a wearable device, a network device in a 5G network, a network device in a future evolved PLMN, or the like, may be an access point (access point, AP) in a WLAN, may be a gNB in a new radio (new radio, NR) system, or may be a satellite base station in a satellite communication system, or the like. This is not limited in embodiments of this application.

In a network structure, the access network device may include a centralized unit (centralized unit, CU) node, a distributed unit (distributed unit, DU) node, a RAN device that includes a CU node and a DU node, or a RAN device that includes a CU control plane node (CU-CP node), a CU user plane node (CU-UP node), and a DU node.

The access network device provides a service for a cell. A terminal device communicates with the cell by using a transmission resource (for example, a frequency domain resource or a spectrum resource) allocated by the access network device. The cell may belong to a macro base station (for example, a macro eNB or a macro gNB), or may belong to a base station corresponding to a small cell (small cell). The small cell herein may include a metro cell (metro cell), a micro cell (micro cell), a pico cell (pico cell), a femto cell (femto cell), or the like. These small cells are characterized by a small coverage area and low transmit power, and are suitable for providing high-speed data transmission services.

The core network device in embodiments of this application may be a core network element in a 4G network, for example, a mobility management entity (mobility management entity, MME) or a serving gateway (serving gateway, sGW), or may be a core network element in a 5G network, for example, an access and mobility management function (access and mobility management function, AMF) network element or a user plane function (user plane function, UPF) network element, or may be a core network element with another name. This is not limited in embodiments of this application.

The access network device and the core network device in embodiments of this application may be collectively referred to as a network device.

In embodiments of this application, the terminal device, the access network device, and the core network device each include a hardware layer, an operating system layer running on the hardware layer, and an application layer running on the operating system layer. The hardware layer includes hardware such as a central processing unit (central processing unit, CPU), a memory management unit (memory management unit, MMU), and a memory (also referred to as a main memory). The operating system may be any one or more computer operating systems for implementing service processing through a process (process), for example, a Linux operating system, a Unix operating system, an Android operating system, an iOS operating system, or a Windows operating system. The application layer includes applications such as Browser, Contacts, word processing software, and instant messaging software. In addition, a specific structure of an execution body of the method provided in embodiments of this application is not specially limited in embodiments of this application, provided that a program that records code of the method provided in embodiments of this application can be run to perform communication according to the method provided in embodiments of this application. For example, the execution body of the method provided in embodiments of this application may be one of a terminal device, an access network device, or a core network device, or may be a functional module that is in the foregoing device and that can invoke and execute a program.

In addition, aspects or features of this application may be implemented as a method, an apparatus, or a product that uses standard programming and/or engineering technologies. The term "product" used in this application covers a computer program that can be accessed from any computer-readable component, carrier, or medium. For example, the computer-readable medium may include but is not limited to a magnetic storage component (for example, a hard disk, a floppy disk, or a magnetic tape), an optical disc (for example, a compact disc (compact disc, CD), or a digital versatile disc (digital versatile disc, DVD)), a smart card, and a flash memory component (for example, an erasable programmable read-only memory (erasable programmable read-only memory, EPROM), a card, a stick, or a key drive). In addition, various storage media described in this specification may indicate one or more devices and/or other machine-readable media configured to store information. The term "machine-readable media" may include but is not limited to a radio channel, and various other media that can store, contain, and/or carry instructions and/or data.

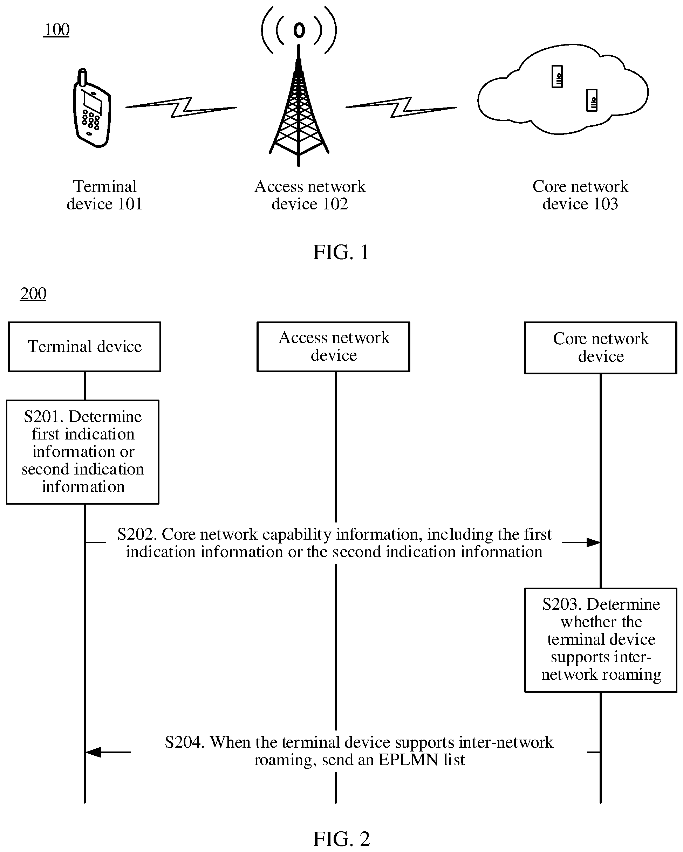

To facilitate understanding of embodiments of this application, a communication system applicable to embodiments of this application is first described in detail with reference to FIG. 1.

FIG. 1 is a schematic diagram of a communication system 100 according to an embodiment of this application. The communication system 100 may include a terminal device 101, an access network device 102, and a core network device 103. The terminal device 101 is connected to the access network device 102 in a wireless manner, and the access network device 102 may be connected to the core network device 103 in a wireless or wired manner.

It should be understood that there may be a plurality of terminal devices, a plurality of access network devices, and a plurality of core network devices in the communication system. This is not limited in this embodiment of this application.

It should be understood that FIG. 1 is merely a schematic diagram. The communication system 100 may further include other network devices, for example, a wireless relay device and a wireless backhaul device, not shown in FIG. 1. Quantities of core network devices, access network devices, and terminal devices included in the communication system 100 are not limited in this embodiment of this application.

Inter-network roaming is a service by using which a terminal device in a given public land mobile network (public land mobile network, PLMN) can obtain a service from another PLMN in any place or region in a same country. Currently, there are two roaming scenarios. In one roaming scenario, when a terminal device has no signal coverage in a home network, the terminal device needs to roam to a visited network, and the visited network provides a service for the terminal device. In the other roaming scenario, within a coverage area of a home network, a terminal device has only a 4th generation mobile communication technology (4th generation mobile communication technology, 4G) signal, and has no 5th generation mobile communication technology (5th generation mobile communication technology, 5G) signal. The terminal device needs to roam to a visited network, and the visited network provides a 5G service for the terminal device.

However, the visited network has only a 5G signal, and has no 4G signal. In addition, some terminal devices do not support voice over new radio (voice over new radio, VoNR). When a terminal device that does not support VoNR roams to a visited network, the terminal device cannot perform a voice call, resulting in poor user experience.

In view of this, embodiments of this application propose a method for performing access based on inter-network roaming, to help ensure a voice call of a terminal device in an inter-network roaming scenario, thereby improving user experience.

For ease of understanding, terms in embodiments of this application are first simply described.
1. Public land mobile network (public land mobile network, PLMN): The PLMN is a network established and operated by the government or an operator approved by the government for the purpose of providing land mobile communication services for the public. The network is usually interconnected to a public switched telephone network to form a communication network on a regional or national scale.
2. Equivalent public land mobile network (equivalent public land mobile network, EPLMN): The EPLMN is a PLMN on an equal footing with a PLMN currently selected by a terminal device. The EPLMN mainly resolves user camping and roaming policies of a shared network and an original network. Operators can configure EPLMNs, and communication network resources can be shared between these networks. From a service perspective, in this way, communication network resources can be shared between network resources of different operators or between different PLMNs defined by a same operator.
   It should be understood that a home network and a visited network may send EPLMNs to each other. For example, a PLMN of a home network of a terminal device is a PLMN 1, and a PLMN of a visited network is a PLMN 2. The visited network and the home network may send respective PLMNs to each other as EPLMNs. In this way, when there is no network or only a 4G network in the PLMN 1, the terminal device may roam to and camp on a 5G network of an EPLMN (the PLMN 2) according to a network search process specified in an existing standard.
3. Voice over new radio (voice over new radio, VoNR): The VoNR is also referred to as voice over new radio, a target voice solution of a 5G network, or the like. A terminal device that supports VoNR can directly perform a voice call based on an NR network without falling back to a 4G network, to obtain higher-quality voice service experience and higher-speed data service experience.

Embodiments provided in this application are described below in detail.

In embodiments of this application, a terminal device, an access network device, and a core network device are used as an example for description. It should be understood that the terminal device may be replaced with an apparatus or a chip that can implement a similar function to the terminal device, the access network device may also be replaced with an apparatus or a chip that can implement a similar function to the access network device, and the core network device may also be replaced with an apparatus or a chip that can implement a similar function to the core network device. Names of the devices are not limited in embodiments of this application.

FIG. 2 is a schematic flowchart of a method 200 for performing access based on inter-network roaming according to an embodiment of this application. The method may be applied to the foregoing communication system 100. The method 200 includes the following steps.

S201. A terminal device determines first indication information or second indication information, where the first indication information is used to indicate whether the terminal device supports voice over new radio VoNR, and the second indication information is used to indicate whether the terminal device supports inter-network roaming.

It should be understood that supporting VoNR by the terminal device is a necessary condition for supporting inter-network roaming by the terminal device, in other words, a terminal device supporting VoNR does not necessarily support inter-network roaming, but a terminal device supporting inter-network roaming necessarily supports VoNR.

S202. The terminal device sends core network capability information to a core network device, where the core network capability information includes the first indication information or the second indication information. Correspondingly, the core network device receives the core network capability information from the terminal device.

It should be understood that the core network capability information is first sent by the terminal device to an access network device, and then sent by the access network device to the core network device, in other words, the core network capability information is transparently transmitted by the access network device to the core network device. For example, the core network capability information may be sent by using non-access stratum (non-access stratum, NAS) signaling.

S203. The core network device determines, based on the core network capability information, whether the terminal device supports inter-network roaming.

When the core network capability information includes the first indication information (indicates whether the terminal device supports VoNR), the core network device may perform determining based on the first indication information and other information. When the core network capability information includes the second indication information (indicates whether the terminal device supports inter-network roaming), the core network device may directly determine, based on the second indication information, whether the terminal device supports inter-network roaming.

S204. When the terminal device supports inter-network roaming, the core network device sends an EPLMN list to the terminal device. Correspondingly, the terminal device receives the EPLMN list from the core network device.

Further, the terminal device performs network search based on PLMN in the EPLMN list, to roam to a visited network.

In this embodiment of this application, the core network device sends the EPLMN list to the terminal device only when the terminal device supports inter-network roaming. If the terminal device does not support inter-network roaming, the core network device does not send the EPLMN list to the terminal device, and the terminal device still camps on a home network. In this way, for a terminal device that does not support VoNR or inter-network roaming, if a 4G signal exists in a home network, the terminal device can continue to use the 4G signal in the home network to perform a voice call. For a terminal device that supports inter-network roaming, the terminal device can roam to a visited network, and use a 5G signal in the visited network to perform a voice call, to obtain higher-quality and higher-speed voice service experience. Therefore, the method for performing access based on inter-network roaming in this embodiment of this application helps ensure a voice call of a terminal device in an inter-network roaming scenario, thereby improving user experience.

The following provides descriptions in two possible implementations based on specific content of the core network capability information.

In a possible implementation, the core network capability information includes the first indication information; and that the core network device determines, based on the core network capability information, whether the terminal device supports inter-network roaming in S203 includes: the core network device determines, based on at least one of the following information, whether the terminal device supports inter-network roaming:
(1) first indication information, to be specific, whether the terminal device supports VoNR;
(2) whether the terminal device supports a frequency band that bears inter-network roaming;
(3) whether the terminal device supports slice mapping between a visited network and a home network after inter-network roaming;
(4) whether the terminal device supports a fast emergency call policy of a visited network after inter-network roaming; and
(5) whether a home network of the terminal device is a preset network.

For example, the core network device may determine, based on (1) in the foregoing information, whether the terminal device supports inter-network roaming. When the terminal device supports VoNR, the terminal device supports inter-network roaming; or when the terminal device does not support VoNR, the terminal device does not support inter-network roaming.

For example, the core network device may determine, based on (1) and (2) in the foregoing information, whether the terminal device supports inter-network roaming. When the terminal device supports VoNR and supports a frequency band that bears inter-network roaming, the terminal device supports inter-network roaming; or when the terminal device does not support VoNR and/or does not support a frequency band that bears inter-network roaming, the terminal device does not support inter-network roaming.

It should be understood that the frequency band that bears inter-network roaming may be an n28 frequency band of 700 M, and is determined based on current network deployment. The terminal device reports a frequency band supported by the terminal device (for example, reports the frequency band by using the core network capability information) to the core network device, so that the core network device performs determining.

For example, the core network device may determine, based on (1), (2), and (3) in the foregoing information, whether the terminal device supports inter-network roaming. When the terminal device supports VoNR, supports a frequency band that bears inter-network roaming, and supports slice mapping between a visited network and a home network after inter-network roaming, the terminal device supports inter-network roaming; or when the terminal device supports none of (1), (2), and (3), the terminal device does not support inter-network roaming.

For example, the core network device may determine, based on (1), (2), and (5) in the foregoing information, whether the terminal device supports inter-network roaming. When the terminal device supports VoNR, supports a frequency band that bears inter-network roaming, and the home network of the terminal device is not a preset network, the terminal device supports inter-network roaming; or when the terminal device does not support (1) and/or (2), or the home network of the terminal device is a preset network, the terminal device does not support inter-network roaming.

It should be understood that the preset network herein may be represented as a specific operator. In the specific operator, even if the home network has a 4G signal, because coverage, a network speed, and call continuity of the 4G signal of the specific operator in the home network are better than those of a 5G signal in a visited network, the terminal device does not need to roam to the visited network.

For example, the core network device may determine, based on (1) to (4) in the foregoing information, whether the terminal device supports inter-network roaming. When the terminal device supports VoNR, supports a frequency band that bears inter-network roaming, supports slice mapping between a visited network and a home network after inter-network roaming, and supports a fast emergency call policy of a visited network after inter-network roaming, the terminal device supports inter-network roaming; or when the terminal device supports none of (1) to (4), the terminal device does not support inter-network roaming.

It should be understood that the fast emergency call policy may be specifically directly initiating an emergency call by using a common call process in the visited network.

For example, the core network device may determine, based on (1) to (5) in the foregoing information, whether the terminal device supports inter-network roaming. When the terminal device supports VoNR, supports a frequency band that bears inter-network roaming, supports slice mapping between a visited network and a home network after inter-network roaming, supports a fast emergency call policy of a visited network after inter-network roaming, and the home network of the terminal device is not a preset network, the terminal device supports inter-network roaming; or when the terminal device supports none of (1) to (5), or the home network of the terminal device is a preset network, the terminal device does not support inter-network roaming.

In this embodiment of this application, the information (1) to (5) may be randomly combined, and the core network device performs determining based on combined information. In the foregoing examples, only some possible cases are used for description. Other cases are similar and are not listed one by one herein.

In another possible implementation, the core network capability information includes the second indication information; and that the terminal device determines second indication information in S201 includes:
the terminal device determines, based on at least one of the following information, whether the terminal device supports inter-network roaming:
(1) whether the terminal device supports VoNR;
(2) whether the terminal device supports a frequency band that bears inter-network roaming;
(3) whether the terminal device supports slice mapping between a visited network and a home network after inter-network roaming;
(4) whether the terminal device supports a fast emergency call policy of a visited network after inter-network roaming; and
(5) whether a home network of the terminal device is a preset network.

A method for determining, by the terminal device, whether the terminal device supports inter-network roaming is the same as the method for determining, by the core network device, whether the terminal device supports inter-network roaming. To avoid repetition, details are not described herein again.

As an optional embodiment, the first indication information or the second indication information is a spare bit in the core network capability information.

For example, when the spare bit in the core network capability information is a first value, the first indication information indicates that the terminal device supports VoNR, or the second indication information indicates that the terminal device supports inter-network roaming; or when the spare bit in the core network capability information is a second value, the first indication information indicates that the terminal device does not support VoNR, or the second indication information indicates that the terminal device does not support inter-network roaming. For example, the spare bit may be 1 bit, the first value is 1, and the second value is 0. Alternatively, the first value is 0, and the second value is 1. This is not limited in this embodiment of this application.

The following provides a specific meaning of each field of the core network capability information with reference to Table 1.

**Table 1**

| Voice domain preference and terminal device's usage setting information element identifier (voice domain preference and UE's usage setting IEI) | | | | | | |
|---|---|---|---|---|---|---|
| Length of voice domain preference and terminal device's usage setting contents (length of voice domain preference and UE's usage setting contents) | | | | | | |
| Spare bit | Spare bit | Spare bit | Spare bit | Spare bit | Terminal device's usage setting (UE's usage setting) | Voice domain preference for evolved universal terrestrial radio access network E-UTRAN (voice domain preference for E-UTRAN) |

In Table 1, a field with a spare bit is selected to carry the first indication information or the second indication information. When the bit of the field is 0, the terminal device does not support VoNR or does not support inter-network roaming; or when the bit of the field is 1, the terminal device supports VoNR or supports inter-network roaming.

As an optional embodiment, when the terminal device supports inter-network roaming, the terminal device enables network search for an inter-network roaming frequency band, and/or accesses a visited network corresponding to a network identifier included in the EPLMN list; or when the terminal device does not support inter-network roaming, the terminal device disables network search for an inter-network roaming frequency band, and/or forbids access to a visited network corresponding to a network identifier included in the EPLMN list.

The inter-network roaming frequency band herein may be, for example, an n28 frequency band of 700 M, and is determined based on current network deployment. The EPLMN list herein may include a network identifier of at least one visited network.

It is assumed that the terminal device does not support inter-network roaming, but the core network device delivers the EPLMN list to the terminal device. The terminal device may forbid access to the visited network corresponding to the network identifier included in the EPLMN list, in other words, the terminal device does not camp on the visited network corresponding to the network identifier included in the EPLMN list.

In this embodiment of this application, when the terminal device does not support inter-network roaming, regardless of whether the core network device delivers the EPLMN list to the terminal device, the terminal device may disable network search for the inter-network roaming frequency band, and/or forbid access to the visited network corresponding to the network identifier included in the EPLMN list, to ensure that the terminal device does not roam to the visited network, and reduce energy consumption of the terminal device.

The following uses an example in which the foregoing information (1) and (5) are combined to determine whether the terminal device supports inter-network roaming, to describe this embodiment of this application.

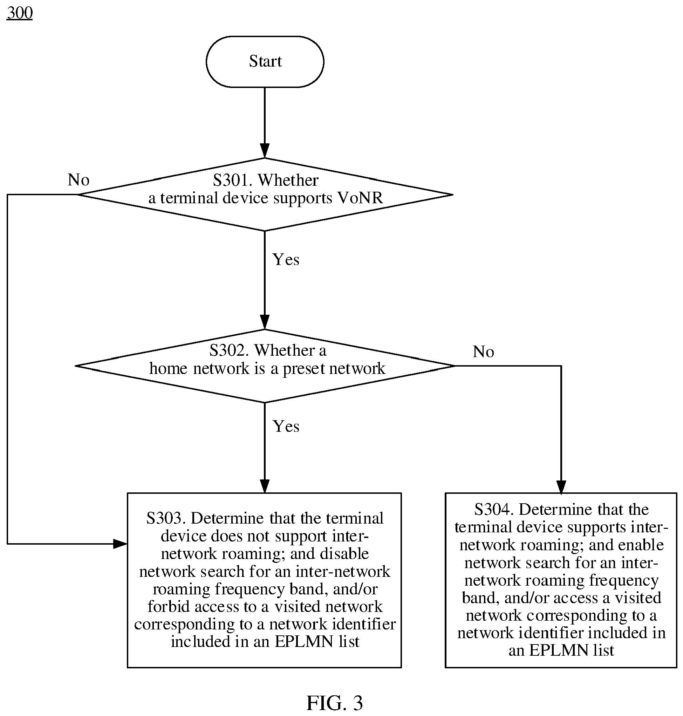

FIG. 3 is a schematic flowchart of another method 300 for performing access based on inter-network roaming according to an embodiment of this application. The method 300 may be applied to the foregoing communication system 100, and is performed by a terminal device. The method 300 includes the following steps.

S301. Determine whether the terminal device supports VoNR.

S302. When the terminal device supports VoNR, determine whether a home network of the terminal device is a preset network.

S303. When the home network of the terminal device is a preset network, determine that the terminal device does not support inter-network roaming; and the terminal device disables network search for an inter-network roaming frequency band, and/or forbids access to a visited network corresponding to a network identifier included in an EPLMN list; or when the terminal device does not support VoNR, determine that the terminal device does not support inter-network roaming; and the terminal device disables network search for an inter-network roaming frequency band, and/or forbids access to a visited network corresponding to a network identifier included in an EPLMN list.

S304. When the home network of the terminal device is not a preset network, determine that the terminal device supports inter-network roaming; and the terminal device enables network search for an inter-network roaming frequency band, and/or accesses a visited network corresponding to a network identifier included in an EPLMN list.

It should be understood that there is no execution sequence between S301 and S302. The method 300 shown in FIG. 3 is merely used as an example. It is first determined whether the terminal device supports VoNR; and then, when the terminal device supports VoNR, it is determined whether the home network of the terminal device is a preset network. In another possible implementation, it may be first determined whether the home network of the terminal device is a preset network; and then, when the home network of the terminal device is not a preset network, it is determined whether the terminal device supports VoNR. This is not limited in this embodiment of this application.

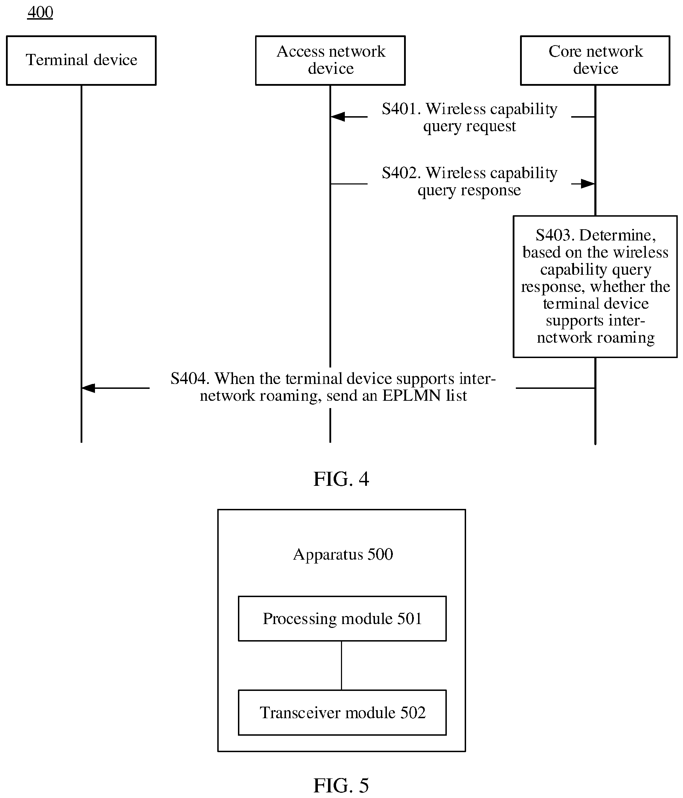

FIG. 4 is a schematic flowchart of another method 400 for performing access by a terminal device according to an embodiment of this application. The method may be applied to the foregoing communication system 100. The method 400 includes the following steps.

S401. A core network device sends a wireless capability query request to an access network device, where the wireless capability query request is used to request to query a wireless capability of a terminal device. Correspondingly, the access network device receives the wireless capability query request from the core network device.

It should be understood that capability information of the terminal device includes wireless capability information and core network capability information. The wireless capability information may be reported by using radio resource control (radio resource control, RRC) signaling, and the core network capability information may be reported by using NAS signaling. The wireless capability information includes information used to indicate whether the terminal device supports VoNR or supports inter-network roaming. However, the core network device cannot parse the wireless capability information, and needs to send the wireless capability query request to the access network device.

S402. The access network device sends a wireless capability query response to the core network device based on the wireless capability query request, where the wireless capability query response includes first indication information or second indication information, the first indication information is used to indicate whether the terminal device supports VoNR, and the second indication information is used to indicate whether the terminal device supports inter-network roaming. Correspondingly, the core network device receives the wireless capability query response from the access network device.

It should be understood that after the access network device receives the wireless capability query request from the core network device, the access network device parses the wireless capability information of the terminal device to obtain the first indication information or the second indication information, and sends the wireless capability query response to the core network device.

S403. The core network device determines, based on the wireless capability query response, whether the terminal device supports inter-network roaming.

When the wireless capability query response includes the first indication information (indicates whether the terminal device supports VoNR), the core network device performs determining based on the first indication information and other information. When the wireless capability query response includes the second indication information (indicates whether the terminal device supports inter-network roaming), the core network device may directly determine, based on the second indication information, whether the terminal device supports inter-network roaming.

S404. When the terminal device supports inter-network roaming, the core network device sends an EPLMN list to the terminal device.

Further, the terminal device receives the EPLMN list from the core network device, and the terminal device may perform network search based on PLMN in the EPLMN list, to roam to a visited network.

In this embodiment of this application, the core network device sends the EPLMN list to the terminal device only when the terminal device supports inter-network roaming. If the terminal device does not support inter-network roaming, the core network device does not send the EPLMN list to the terminal device, and the terminal device still camps on a home network. In this way, for a terminal device that does not support VoNR or inter-network roaming, if a 4G signal exists in a home network, the terminal device can continue to use the 4G signal in the home network to perform a voice call. For a terminal device that supports inter-network roaming, the terminal device can roam to a visited network, and use a 5G signal in the visited network to perform a voice call, to obtain higher-quality and higher-speed voice service experience. Therefore, the method for performing access based on inter-network roaming in this embodiment of this application helps ensure a voice call of a terminal device in an inter-network roaming scenario, thereby improving user experience.

The following provides descriptions in three possible implementations based on specific content of the wireless capability query response.

In a possible implementation, the wireless capability information includes the first indication information, and the wireless capability query response includes the first indication information; and that the core network device determines, based on the wireless capability query response, whether the terminal device supports inter-network roaming in S403 includes: the core network device determines, based on at least one of the following information, whether the terminal device supports inter-network roaming:
(1) first indication information, to be specific, whether the terminal device supports VoNR;
(2) whether the terminal device supports a frequency band that bears inter-network roaming;
(3) whether the terminal device supports slice mapping between a visited network and a home network after inter-network roaming;
(4) whether the terminal device supports a fast emergency call policy of a visited network after inter-network roaming; and
(5) whether a home network of the terminal device is a preset network.

A method for determining, by the core network device based on at least one of the foregoing information, whether the terminal device supports inter-network roaming is described above. Details are not described herein again.

In another possible implementation, the wireless capability information includes the first indication information, and the wireless capability query response includes the second indication information; and the method 400 further includes:
the access network device determines the second indication information (determines whether the terminal device supports inter-network roaming) based on at least one of the following information:
(1) whether the terminal device supports VoNR;
(2) whether the terminal device supports a frequency band that bears inter-network roaming;
(3) whether the terminal device supports slice mapping between a visited network and a home network after inter-network roaming;
(4) whether the terminal device supports a fast emergency call policy of a visited network after inter-network roaming; and
(5) whether a home network of the terminal device is a preset network.

A method for determining, by the access network device, whether the terminal device supports inter-network roaming is the same as the method for determining, by the core network device, whether the terminal device supports inter-network roaming. Details are not described herein again.

In still another possible implementation, the wireless capability information includes the second indication information; and the method 400 further includes: the terminal device determines the second indication information (determines whether the terminal device supports inter-network roaming) based on at least one of the following information:
(1) whether the terminal device supports VoNR;
(2) whether the terminal device supports a frequency band that bears inter-network roaming;
(3) whether the terminal device supports slice mapping between a visited network and a home network after inter-network roaming;
(4) whether the terminal device supports a fast emergency call policy of a visited network after inter-network roaming; and
(5) whether a home network of the terminal device is a preset network.

A method for determining, by the terminal device, whether the terminal device supports inter-network roaming is the same as the method for determining, by the core network device, whether the terminal device supports inter-network roaming. Details are not described herein again.

As an optional embodiment, the first indication information or the second indication information is located in a new field in the wireless capability query response.

The following provides a specific meaning of each field of the wireless capability query response with reference to Table 2.

**Table 2**

| Information element/Group name | Presentation | Information element type and number |
|---|---|---|
| Message type (message type) | Mandatory (M) | 9.3.1.1 |
| Identity code for identifying a terminal device on an access and mobility management network element side (AMF UE NGAP ID) | Mandatory (M) | 9.3.3.1 |
| Identity code for identifying a terminal device on a radio access network element side (RAN UE NGAP ID) | Mandatory (M) | 9.3.3.2 |
| Support indicator field of a multimedia subsystem under a network interconnection protocol (IMS voice support indicator) | Mandatory (M) | 9.3.1.89 |
| Criticality diagnostics (criticality diagnostics) | Optional (O) | 9.3.1.3 |
| New field | | |

It should be understood that sequence numbers of the foregoing processes do not mean execution sequences. The execution sequences of the processes should be determined based on functions and internal logic of the processes, and should not be construed as any limitation on the implementation processes of embodiments of this application.

The method for performing access based on inter-network roaming in embodiments of this application is described above in detail with reference to FIG. 2 to FIG. 4. An apparatus for performing access based on inter-network roaming in embodiments of this application is described below in detail with reference to FIG. 5 to FIG. 7.

FIG. 5 shows an apparatus 500 for performing access based on inter-network roaming according to an embodiment of this application. The apparatus 500 includes a processing module 501 and a transceiver module 502.

In a possible implementation, the apparatus 500 is configured to implement the steps corresponding to the terminal device in the foregoing method 200.

The processing module 501 is configured to determine first indication information or second indication information, where the first indication information is used to indicate whether the apparatus 500 supports voice over new radio VoNR, and the second indication information is used to indicate whether the apparatus 500 supports inter-network roaming. The transceiver module 502 is configured to send core network capability information to a core network device, where the core network capability information includes the first indication information or the second indication information.

Optionally, the first indication information or the second indication information is a spare bit in the core network capability information.

Optionally, the core network capability information includes the second indication information; and the processing module 501 is specifically configured to determine, based on at least one of the following information, whether the apparatus 500 supports inter-network roaming:
whether the apparatus 500 supports VoNR;
whether the apparatus 500 supports a frequency band that bears inter-network roaming;
whether the apparatus 500 supports slice mapping between a visited network and a home network after inter-network roaming;
whether the apparatus 500 supports a fast emergency call policy of a visited network after inter-network roaming; and
whether a home network of the apparatus 500 is a preset network.

Optionally, the transceiver module 502 is further configured to receive an equivalent public land mobile network EPLMN list from the core network device.

Optionally, the processing module 501 is further configured to: when the apparatus 500 supports inter-network roaming, enable network search for an inter-network roaming frequency band, and/or access a visited network corresponding to a network identifier included in the EPLMN list; or when the apparatus 500 does not support inter-network roaming, disable network search for an inter-network roaming frequency band, and/or forbid access to a visited network corresponding to a network identifier included in the EPLMN list.

In another possible implementation, the apparatus 500 is configured to implement the steps corresponding to the core network device in the foregoing method 200.

The transceiver module 502 is configured to receive core network capability information from a terminal device, where the core network capability information includes first indication information or second indication information, the first indication information is used to indicate whether the terminal device supports voice over new radio VoNR, and the second indication information is used to indicate whether the terminal device supports inter-network roaming. The processing module 501 is configured to: determine, based on the core network capability information, whether the terminal device supports inter-network roaming; and when the terminal device supports inter-network roaming, send an equivalent public land mobile network EPLMN list to the terminal device.

Optionally, the core network capability information includes the first indication information; and the processing module 501 is configured to determine, based on the first indication information and at least one of the following information, whether the terminal device supports inter-network roaming:
whether the terminal device supports a frequency band that bears inter-network roaming;
whether the terminal device supports slice mapping between a visited network and a home network after inter-network roaming;
whether the terminal device supports a fast emergency call policy of a visited network after inter-network roaming; and
whether a home network of the terminal device is a preset network.

Optionally, the first indication information or the second indication information is a spare bit in the core network capability information.

In still another possible implementation, the apparatus 500 is configured to implement the steps corresponding to the core network device in the foregoing method 400.

The transceiver module 502 is configured to send a wireless capability query request to an access network device, where the wireless capability query request is used to request to query a wireless capability of a terminal device; and receive a wireless capability query response from the access network device, where the wireless capability query response includes first indication information or second indication information, the first indication information is used to indicate whether the terminal device supports voice over new radio VoNR, and the second indication information is used to indicate whether the terminal device supports inter-network roaming. The processing module 501 is configured to determine, based on the wireless capability query response, whether the terminal device supports inter-network roaming. The transceiver module 502 is further configured to: when the terminal device supports inter-network roaming, send an equivalent public land mobile network EPLMN list to the terminal device.

Optionally, the wireless capability query response includes the first indication information; and the processing module 501 is configured to determine, based on the first indication information and at least one of the following information, whether the terminal device supports inter-network roaming:
whether the terminal device supports a frequency band that bears inter-network roaming;
whether the terminal device supports slice mapping between a visited network and a home network after inter-network roaming;
whether the terminal device supports a fast emergency call policy of a visited network after inter-network roaming; and
whether a home network of the terminal device is a preset network.

It should be understood that the apparatus 500 herein is implemented in a form of functional modules. The "module" herein may be an application specific integrated circuit (application specific integrated circuit, ASIC), an electronic circuit, a processor (for example, a shared processor, a dedicated processor, or a packet processor) configured to execute one or more software or firmware programs, a memory, a combined logic circuit, and/or another suitable component that supports the described function. In an optional example, a person skilled in the art may understand that the apparatus 500 may be specifically the terminal device or the core network device in the foregoing embodiments, and the apparatus 500 may be configured to perform the processes and/or steps corresponding to the terminal device or the core network device in the foregoing method embodiments. To avoid repetition, details are not described herein again.

The apparatus 500 has a function of implementing the corresponding steps performed by the terminal device or the core network device in the foregoing methods. The function may be implemented by hardware, or may be implemented by hardware by executing corresponding software. The hardware or software includes one or more modules corresponding to the function. For example, the transceiver module 502 may include a sending module and a receiving module. The sending module may be configured to implement the steps and/or processes that correspond to the transceiver module and that are used to perform sending actions. The receiving module may be configured to implement the steps and/or processes that correspond to the transceiver module and that are used to perform receiving actions. The sending module may be replaced with a transmitter, and the receiving module may be replaced with a receiver, to separately perform sending and receiving operations and a related processing operation in each method embodiment.

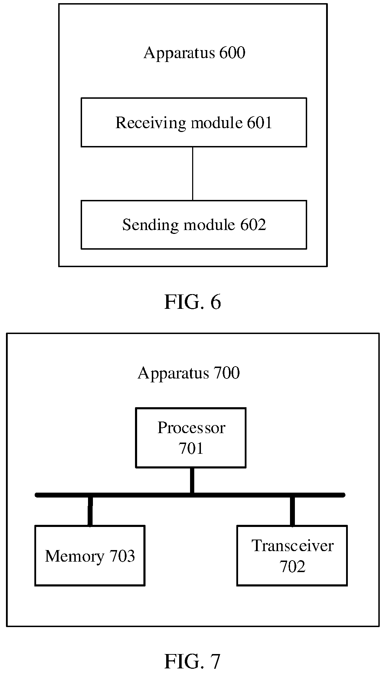

FIG. 6 shows another apparatus 600 for performing access based on inter-network roaming according to an embodiment of this application. The access apparatus 600 includes a receiving module 601 and a sending module 602.

In a possible implementation, the apparatus 600 is configured to implement the steps corresponding to the access network device in the foregoing method 400.

The receiving module 601 is configured to receive a wireless capability query request from a core network device, where the wireless capability query request is used to request to query a wireless capability of a terminal device. The sending module 602 is configured to send a wireless capability query response to the core network device based on the wireless capability query request, where the wireless capability query response includes first indication information or second indication information, the first indication information is used to indicate whether the terminal device supports voice over new radio VoNR, and the second indication information is used to indicate whether the terminal device supports inter-network roaming.

Optionally, the receiving module 601 is further configured to receive wireless capability information from the terminal device, where the wireless capability information includes the first indication information or the second indication information.

Optionally, the wireless capability information includes the first indication information, and the wireless capability query response includes the second indication information; and the apparatus 600 further includes a processing module, configured to determine the second indication information based on the first indication information and at least one of the following information:
whether the terminal device supports a frequency band that bears inter-network roaming;
whether the terminal device supports slice mapping between a visited network and a home network after inter-network roaming;
whether the terminal device supports a fast emergency call policy of a visited network after inter-network roaming; and
whether a home network of the terminal device is a preset network.

It should be understood that the apparatus 600 herein is implemented in a form of functional modules. The "module" herein may be an application specific integrated circuit (application specific integrated circuit, ASIC), an electronic circuit, a processor (for example, a shared processor, a dedicated processor, or a packet processor) configured to execute one or more software or firmware programs, a memory, a combined logic circuit, and/or another suitable component that supports the described function. In an optional example, a person skilled in the art may understand that the apparatus 600 may be specifically the access network device in the foregoing embodiments, and the apparatus 600 may be configured to perform the processes and/or steps corresponding to the access network device in the foregoing method embodiments. To avoid repetition, details are not described herein again.

The apparatus 600 has a function of implementing the corresponding steps performed by the access network device in the foregoing methods. The function may be implemented by hardware, or may be implemented by hardware by executing corresponding software. The hardware or software includes one or more modules corresponding to the function. For example, the sending module 602 may be configured to perform steps and/or processes of sending actions, and the receiving module 601 may be configured to perform steps and/or processes of receiving actions. The sending module 602 may be replaced with a transmitter, and the receiving module 601 may be replaced with a receiver, to separately perform sending and receiving operations and a related processing operation in each method embodiment.

In embodiments of this application, the apparatuses 500 and 600 for performing access based on inter-network roaming in FIG. 5 and FIG. 6 may alternatively be chips or chip systems, for example, systems on chip (system on chip, SOC). Correspondingly, the transceiver module 502, the receiving module 601, and the sending module 602 may be transceiver circuits of the chips. This is not limited herein.

FIG. 7 shows another apparatus 700 for performing access based on inter-network roaming according to an embodiment of this application. The access apparatus 700 includes a processor 701, a transceiver 702, and a memory 703. The processor 701, the transceiver 702, and the memory 703 communicate with each other through an internal connection channel. The memory 703 is configured to store instructions. The processor 701 is configured to execute the instructions stored in the memory 703, to control the transceiver 702 to send a signal and/or receive a signal.

It should be understood that the access apparatus 700 may be specifically any one of the terminal device, the access network device, or the core network device in the foregoing embodiments, and may be configured to perform the steps and/or processes corresponding to any one of the terminal device, the access network device, or the core network device in the foregoing method embodiments. Optionally, the memory 703 may include a read-only memory and a random access memory, and provide instructions and data for the processor. A part of the memory may further include a nonvolatile random access memory. For example, the memory may further store device type information. The processor 701 may be configured to execute the instructions stored in the memory, and when the processor 701 executes the instructions stored in the memory, the processor 701 is configured to perform the steps and/or processes in the foregoing method embodiments corresponding to any one of the terminal device, the access network device, or the core network device. The transceiver 702 may include a transmitter and a receiver. The transmitter may be configured to implement the steps and/or processes that correspond to the transceiver and that are used to perform sending actions. The receiver may be configured to implement the steps and/or processes that correspond to the transceiver and that are used to perform receiving actions.

It should be understood that, in this embodiment of this application, the processor may be a central processing unit (central processing unit, CPU), or the processor may be another general-purpose processor, a digital signal processor (DSP), an application specific integrated circuit (ASIC), a field-programmable gate array (FPGA) or another programmable logic device, a discrete gate or a transistor logic device, a discrete hardware component, or the like. The general-purpose processor may be a microprocessor, or the processor may be any conventional processor or the like.

In an implementation process, the steps of the foregoing methods may be implemented by using a hardware integrated logic circuit in the processor, or instructions in a form of software. The steps of the methods disclosed with reference to embodiments of this application may be directly performed by a hardware processor, or may be performed by a combination of hardware in the processor and a software module. The software module may be located in a storage medium that is mature in the art, such as a random access memory, a flash memory, a read-only memory, a programmable read-only memory, an electrically erasable programmable memory, or a register. The storage medium is located in the memory. The processor executes the instructions in the memory, and completes the steps of the foregoing methods in combination with hardware thereof. To avoid repetition, details are not described herein again.

This application further provides a computer-readable storage medium. The computer-readable storage medium is configured to store a computer program. The computer program is used to implement the method corresponding to any one of the terminal device, the access network device, or the core network device in the foregoing embodiments.

This application further provides a computer program product. The computer program product includes a computer program (which may also be referred to as code or instructions). When the computer program is run on a computer, the computer can perform the method corresponding to any one of the terminal device, the access network device, or the core network device in the foregoing embodiments.

This application further provides a system for performing communication based on inter-network roaming, including the foregoing terminal device, access network device, or core network device.

A person of ordinary skill in the art may be aware that, in combination with the examples described in the embodiments disclosed in this specification, modules and algorithm steps can be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for detailed working processes of the foregoing system, apparatus, and unit, refer to the corresponding processes in the foregoing method embodiments. Details are not described herein again.

In the several embodiments provided in this application, it should be understood that the disclosed system, apparatus, and method may be implemented in other manners. For example, the described apparatus embodiment is merely an example. For example, the module division is merely logical function division and may be other division during actual implementation. For example, a plurality of modules or components may be combined or integrated into another system, or some features may be ignored or not performed. In addition, the displayed or discussed mutual couplings or direct couplings or communication connections may be implemented through some interfaces. The indirect couplings or communication connections between the apparatuses or modules may be implemented in electronic, mechanical, or other forms.

The modules described as separate parts may or may not be physically separate, and parts displayed as modules may or may not be physical modules, to be specific, may be located in one place, or may be distributed on a plurality of network modules. Some or all of the modules may be selected based on actual needs to achieve the objectives of the solutions of embodiments.

In addition, the functional modules in embodiments of this application may be integrated into one processing module, each of the modules may exist alone physically, or two or more modules may be integrated into one module.

When the function is implemented in a form of a software functional module and sold or used as an independent product, the function may be stored in a computer-readable storage medium. Based on such an understanding, the technical solutions of this application essentially, the part contributing to the conventional technology, or a part of the technical solutions may be implemented in a form of a software product. The computer software product is stored in a storage medium, and includes several instructions for enabling a computer device (which may be a personal computer, a server, a network device, or the like) to perform all or some of the steps of the methods described in embodiments of this application. The storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but the protection scope of embodiments of this application is not limited thereto. The protection scope of embodiments of this application shall be subject to the protection scope of the claims.

## Claims

1. A method for performing access to a visited network based on inter-network roaming, **characterised in**:
determining (S201), by a terminal device, second indication information, wherein the second indication information is used to indicate whether the terminal device supports inter-network roaming;
sending (S202), by the terminal device, core network capability information to a core network device, wherein the core network capability information comprises the second indication information;
receiving (S204), by the terminal device, an equivalent public land mobile network, EPLMN, list from the core network device when the terminal device supports inter-network roaming; and
performing, by the terminal device, network search based on a public land mobile network, PLMN, in the EPLMN list, to roam to a visited network.

2. The method according to claim 1, wherein the second indication information is a spare bit in the core network capability information.

3. The method according to claim 1, wherein the core network capability information comprises the second indication information; and
the determining, by a terminal device, second indication information comprises:
determining, by the terminal device based on at least one of the following information, whether the terminal device supports inter-network roaming:
whether the terminal device supports VoNR;
whether the terminal device supports a frequency band that bears inter-network roaming;
whether the terminal device supports slice mapping between the visited network and a home network after inter-network roaming;
whether the terminal device supports a fast emergency call policy of the visited network after inter-network roaming; and
whether a home network of the terminal device is a preset network.

4. The method according to any one of claims 1-3, wherein the method further comprises:
when the terminal device supports inter-network roaming, enabling, by the terminal device, network search for an inter-network roaming frequency band, and/or accessing the visited network corresponding to a network identifier comprised in the EPLMN list; or
when the terminal device does not support inter-network roaming, disabling, by the terminal device, network search for an inter-network roaming frequency band, and/or forbidding access to the visited network corresponding to a network identifier comprised in the EPLMN list.

5. A method for performing access to a visited network based on inter-network roaming, **characterised in**:
receiving (S202), by a core network device, core network capability information from a terminal device, wherein the core network capability information comprises second indication information, and the second indication information is used to indicate whether the terminal device supports inter-network roaming;
determining (S203), by the core network device based on the core network capability information, whether the terminal device supports inter-network roaming; and
when the terminal device supports inter-network roaming, sending (S204), by the core network device, an equivalent public land mobile network, EPLMN, list to the terminal device.

6. The method according to claim 5, wherein the second indication information is a spare bit in the core network capability information.

7. A terminal device (500) for performing access to a visited network based on inter-network roaming, **characterised in** comprising:
a processing module (501), configured to determine second indication information, wherein the second indication information is used to indicate whether the terminal device supports inter-network roaming;
a transceiver module (502), configured to send core network capability information to a core network device, wherein the core network capability information comprises the second indication information;
wherein the transceiver module (502) is further configured to receive an equivalent public land mobile network, EPLMN, list from the core network device when the terminal device supports inter-network roaming; and
the processing module (501) is further configured to perform network search based on a public land mobile network, PLMN, in the EPLMN list, to roam to a visited network.

8. A core network device for performing access to a visited network based on inter-network roaming, **characterised in** comprising:
a transceiver module, configured to receive core network capability information from a terminal device, wherein the core network capability information comprises second indication information, and the second indication information is used to indicate whether the terminal device supports inter-network roaming; and
a processing module, configured to: determine, based on the core network capability information, whether the terminal device supports inter-network roaming; and when the terminal device supports inter-network roaming, send an equivalent public land mobile network, EPLMN, list to the terminal device.

## Patentansprüche

1. Verfahren zum Durchführen eines Zugriffs auf ein besuchtes Netz basierend auf netzübergreifendem Roaming, **gekennzeichnet durch**:
Bestimmen (S201), durch eine Endgerätvorrichtung, von zweiten Anzeigeinformationen, wobei die zweiten Anzeigeinformationen dazu verwendet werden anzuzeigen, ob die Endgerätvorrichtung netzübergreifendes Roaming unterstützt;
Senden (S202), durch die Endgerätvorrichtung, von Kernnetzfähigkeitsinformationen an eine Kernnetzvorrichtung, wobei die Kernnetzfähigkeitsinformationen die zweiten Anzeigeinformationen umfassen;
Empfangen (S204), durch die Endgerätvorrichtung, einer Liste äquivalenter öffentlicher terrestrischer Mobilfunknetze (Equivalent Public Land Mobile Network, EPLMN) von der Kernnetzvorrichtung, wenn die Endgerätvorrichtung netzübergreifendes Roaming unterstützt; und
Durchführen, durch die Endgerätvorrichtung, einer Netzsuche basierend auf einem öffentlichen terrestrischen Mobilfunknetz (Public Land Mobile Network, PLMN) in der EPLMN-Liste, um in ein besuchtes Netz zu roamen.

2. Verfahren nach Anspruch 1, wobei die zweiten Anzeigeinformationen ein Reservebit in den Kernnetzfähigkeitsinformationen sind.

3. Verfahren nach Anspruch 1, wobei die Kernnetzfähigkeitsinformationen die zweiten Anzeigeinformationen umfassen; und
das Bestimmen, durch eine Endgerätvorrichtung, von zweiten Anzeigeinformationen umfasst:
Bestimmen, durch die Endgerätvorrichtung basierend auf mindestens einer der folgenden Informationen, ob die Endgerätvorrichtung netzübergreifendes Roaming unterstützt:
ob die Endgerätvorrichtung VoNR unterstützt;
ob die Endgerätvorrichtung ein Frequenzband unterstützt, das netzübergreifendes Roaming trägt;
ob die Endgerätvorrichtung Slice-Mapping zwischen dem besuchten Netz und einem Heimatnetz nach dem netzübergreifenden Roaming unterstützt;
ob die Endgerätvorrichtung eine schnelle Notrufrichtlinie des besuchten Netzes nach dem netzübergreifenden Roaming unterstützt; und
ob ein Heimatnetz der Endgerätvorrichtung ein voreingestelltes Netz ist.

4. Verfahren nach einem der Ansprüche 1 bis 3, wobei das Verfahren ferner umfasst:
wenn die Endgerätvorrichtung netzübergreifendes Roaming unterstützt, Aktivieren, durch die Endgerätvorrichtung, einer Netzsuche nach einem netzübergreifenden Roaming-Frequenzband und/oder Zugreifen auf das besuchte Netz, das einer in der EPLMN-Liste enthaltenen Netzkennung entspricht; oder
wenn die Endgerätvorrichtung kein netzübergreifendes Roaming unterstützt, Deaktivieren, durch die Endgerätvorrichtung, einer Netzsuche nach einem netzübergreifenden Roaming-Frequenzband und/oder Verbieten eines Zugriffs auf das besuchte Netz, das einer in der EPLMN-Liste enthaltenen Netzkennung entspricht.

5. Verfahren zum Durchführen eines Zugriffs auf ein besuchtes Netz basierend auf netzübergreifendem Roaming, **gekennzeichnet durch**:
Empfangen (S202), durch eine Kernnetzvorrichtung, von Kernnetzfähigkeitsinformationen von einer Endgerätvorrichtung, wobei die Kernnetzfähigkeitsinformationen zweite Anzeigeinformationen umfassen und die zweiten Anzeigeinformationen dazu verwendet werden anzuzeigen, ob die Endgerätvorrichtung netzübergreifendes Roaming unterstützt;
Bestimmen (S203), durch die Kernnetzvorrichtung basierend auf den Kernnetzfähigkeitsinformationen, ob die Endgerätvorrichtung netzübergreifendes Roaming unterstützt; und
wenn die Endgerätvorrichtung netzübergreifendes Roaming unterstützt, Senden (S204), durch die Kernnetzvorrichtung, einer Liste äquivalenter öffentlicher terrestrischer Mobilfunknetze (Equivalent Public Land Mobile Network, EPLMN) an die Endgerätvorrichtung.

6. Verfahren nach Anspruch 5, wobei die zweiten Anzeigeinformationen ein Reservebit in den Kernnetzfähigkeitsinformationen sind.

7. Endgerätvorrichtung (500) zum Durchführen eines Zugriffs auf ein besuchtes Netz basierend auf netzübergreifendem Roaming, **dadurch gekennzeichnet, dass** sie umfasst:
ein Verarbeitungsmodul (501), das dazu konfiguriert ist, zweite Anzeigeinformationen zu bestimmen, wobei die zweiten Anzeigeinformationen dazu verwendet werden anzuzeigen, ob die Endgerätvorrichtung netzübergreifendes Roaming unterstützt;
ein Sende-Empfangs-Modul (502), das dazu konfiguriert ist, Kernnetzfähigkeitsinformationen an eine Kernnetzvorrichtung zu senden, wobei die Kernnetzfähigkeitsinformationen die zweiten Anzeigeinformationen umfassen;
wobei das Sende-Empfangs-Modul (502) ferner dazu konfiguriert ist, eine Liste äquivalenter öffentlicher terrestrischer Mobilfunknetze (Equivalent Public Land Mobile Network, EPLMN) von der Kernnetzvorrichtung zu empfangen, wenn die Endgerätvorrichtung netzübergreifendes Roaming unterstützt; und
das Verarbeitungsmodul (501) ferner dazu konfiguriert ist, eine Netzsuche basierend auf einem öffentlichen terrestrischen Mobilfunknetz (Public Land Mobile Network, PLMN) in der EPLMN-Liste durchzuführen, um in ein besuchtes Netz zu roamen.

8. Kernnetzvorrichtung zum Durchführen eines Zugriffs auf ein besuchtes Netz basierend auf netzübergreifendem Roaming, **dadurch gekennzeichnet, dass** sie umfasst:
ein Sende-Empfangs-Modul, das dazu konfiguriert ist, Kernnetzfähigkeitsinformationen von einer Endgerätvorrichtung zu empfangen, wobei die Kernnetzfähigkeitsinformationen zweite Anzeigeinformationen umfassen und die zweiten Anzeigeinformationen dazu verwendet werden anzuzeigen, ob die Endgerätvorrichtung netzübergreifendes Roaming unterstützt; und
ein Verarbeitungsmodul, das dazu konfiguriert ist: basierend auf den Kernnetzfähigkeitsinformationen zu bestimmen, ob die Endgerätvorrichtung netzübergreifendes Roaming unterstützt; und wenn die Endgerätvorrichtung netzübergreifendes Roaming unterstützt, eine Liste äquivalenter öffentlicher terrestrischer Mobilfunknetze (Equivalent Public Land Mobile Network, EPLMN) an die Endgerätvorrichtung zu senden.

## Revendications

1. Procédé pour effectuer un accès à un réseau visité sur la base d'une itinérance inter-réseaux, **caractérisé par** :
la détermination (S201), par un dispositif terminal, de secondes informations d'indication, dans lequel les secondes informations d'indication sont utilisées pour indiquer si le dispositif terminal prend en charge l'itinérance inter-réseaux ;
l'envoi (S202), par le dispositif terminal, d'informations de capacité de réseau central à un dispositif de réseau central, dans lequel les informations de capacité de réseau central comprennent les secondes informations d'indication ;
la réception (S204), par le dispositif terminal, d'une liste de réseaux mobiles terrestres publics équivalents (Equivalent Public Land Mobile Network, EPLMN) en provenance du dispositif de réseau central lorsque le dispositif terminal prend en charge l'itinérance inter-réseaux ; et
l'exécution, par le dispositif terminal, d'une recherche de réseau sur la base d'un réseau mobile terrestre public (Public Land Mobile Network, PLMN) dans la liste EPLMN, pour itinérer vers un réseau visité.

2. Procédé selon la revendication 1, dans lequel les secondes informations d'indication sont un bit de réserve dans les informations de capacité de réseau central.

3. Procédé selon la revendication 1, dans lequel les informations de capacité de réseau central comprennent les secondes informations d'indication ; et
la détermination, par un dispositif terminal, de secondes informations d'indication comprend :
le fait de déterminer, par le dispositif terminal sur la base d'au moins l'une des informations suivantes, si le dispositif terminal prend en charge l'itinérance inter-réseaux :
si le dispositif terminal prend en charge la VoNR ;
si le dispositif terminal prend en charge une bande de fréquences qui supporte l'itinérance inter-réseaux ;
si le dispositif terminal prend en charge le mappage de tranches entre le réseau visité et un réseau domestique après l'itinérance inter-réseaux ;
si le dispositif terminal prend en charge une politique d'appel d'urgence rapide du réseau visité après l'itinérance inter-réseaux ; et
si un réseau domestique du dispositif terminal est un réseau prédéfini.

4. Procédé selon l'une quelconque des revendications 1 à 3, dans lequel le procédé comprend en outre :
lorsque le dispositif terminal prend en charge l'itinérance inter-réseaux, l'activation, par le dispositif terminal, d'une recherche de réseau pour une bande de fréquences d'itinérance inter-réseaux, et/ou l'accès au réseau visité correspondant à un identifiant de réseau compris dans la liste EPLMN ; ou
lorsque le dispositif terminal ne prend pas en charge l'itinérance inter-réseaux, la désactivation, par le dispositif terminal, d'une recherche de réseau pour une bande de fréquences d'itinérance inter-réseaux, et/ou l'interdiction d'accès au réseau visité correspondant à un identifiant de réseau compris dans la liste EPLMN.

5. Procédé pour effectuer un accès à un réseau visité sur la base d'une itinérance inter-réseaux, **caractérisé par** :
la réception (S202), par un dispositif de réseau central, d'informations de capacité de réseau central en provenance d'un dispositif terminal, dans lequel les informations de capacité de réseau central comprennent de secondes informations d'indication, et les secondes informations d'indication sont utilisées pour indiquer si le dispositif terminal prend en charge l'itinérance inter-réseaux ;
le fait de déterminer (S203), par le dispositif de réseau central sur la base des informations de capacité de réseau central, si le dispositif terminal prend en charge l'itinérance inter-réseaux ; et
lorsque le dispositif terminal prend en charge l'itinérance inter-réseaux, l'envoi (S204), par le dispositif de réseau central, d'une liste de réseaux mobiles terrestres publics équivalents (Equivalent Public Land Mobile Network, EPLMN) au dispositif terminal.

6. Procédé selon la revendication 5, dans lequel les secondes informations d'indication sont un bit de réserve dans les informations de capacité de réseau central.

7. Dispositif terminal (500) pour effectuer un accès à un réseau visité sur la base d'une itinérance inter-réseaux, **caractérisé en ce qu'**il comprend :
un module de traitement (501), configuré pour déterminer de secondes informations d'indication, dans lequel les secondes informations d'indication sont utilisées pour indiquer si le dispositif terminal prend en charge l'itinérance inter-réseaux ;
un module émetteur-récepteur (502), configuré pour envoyer des informations de capacité de réseau central à un dispositif de réseau central, dans lequel les informations de capacité de réseau central comprennent les secondes informations d'indication ;
dans lequel le module émetteur-récepteur (502) est en outre configuré pour recevoir une liste de réseaux mobiles terrestres publics équivalents (Equivalent Public Land Mobile Network, EPLMN) en provenance du dispositif de réseau central lorsque le dispositif terminal prend en charge l'itinérance inter-réseaux ; et
le module de traitement (501) est en outre configuré pour effectuer une recherche de réseau sur la base d'un réseau mobile terrestre public (Public Land Mobile Network, PLMN) dans la liste EPLMN, pour itinérer vers un réseau visité.

8. Dispositif de réseau central pour effectuer un accès à un réseau visité sur la base d'une itinérance inter-réseaux, **caractérisé en ce qu'**il comprend :
un module émetteur-récepteur, configuré pour recevoir des informations de capacité de réseau central en provenance d'un dispositif terminal, dans lequel les informations de capacité de réseau central comprennent de secondes informations d'indication, et les secondes informations d'indication sont utilisées pour indiquer si le dispositif terminal prend en charge l'itinérance inter-réseaux ; et
un module de traitement, configuré pour : déterminer, sur la base des informations de capacité de réseau central, si le dispositif terminal prend en charge l'itinérance inter-réseaux ; et lorsque le dispositif terminal prend en charge l'itinérance inter-réseaux, envoyer une liste de réseaux mobiles terrestres publics équivalents (Equivalent Public Land Mobile Network, EPLMN) au dispositif terminal.
